# EUROPÄISCHE PATENTSCHRIFT

(11) **EP 0 551 550 B1**
(45) Veröffentlichungstag und Bekanntmachung des Hinweises auf die Patenterteilung: **27.12.1995**
(21) Anmeldenummer: 92100756.3
(22) Anmeldetag: 17.01.1992
(51) Int. Cl.: F04D 29/04, F16C 33/20, H02K 5/128, H02K 5/167

(54) **Nassläuferpumpe**
Pump with a wet rotor
Pompe à rotor mouillé

(43) Veröffentlichungstag der Anmeldung: 21.07.1993
(73) Patentinhaber: SIEMENS AKTIENGESELLSCHAFT, 80333 München (DE)
(72) Erfinder: Hartmann, Uwe, Dipl.-Ing. (FH), W-8709 Rimpar (DE)

(56) Entgegenhaltungen:
- EP-A- 0 006 621
- DE-A- 2 234 930
- DE-U- 9 016 330
- US-A- 3 397 644
- US-A- 4 080 198
- US-A- 4 850 818
- DATABASE WPIL Section Ch, Week 8846, Derwent Publications Ltd., London, GB; Class A08, AN 88-328078 & JP-A-63 243 524 (KOMATSU) 11. Oktober 1988
- WEAR Bd. 149, Nr. 1-2, 30. September 1991, LAUSANNE Seiten 255 - 268 MENS,J.W. M.; DE GEE, A.W.J. 'Friction and wear behaviour of 18 polymers in contact with steel in environments of air and water'
- DATABASE WPIL Section Ch, Week 8243, Derwent Publications Ltd., London, GB; Class M27, AN 82-91685E & JP-A-57 152 447 (TOKYO SHIBAURA) 20 September 1982
- DATABASE WPIL Section Ch, Week 8246, Derwent Publications Ltd., London, GB; Class A05, AN 82-98988E & JP-A-55 087 583 (RICOH) 3. Juli 1980

## Beschreibung

Die Erfindung bezieht sich auf eine von einem Elektromotor angetriebene Pumpe gemäß Oberbegriff des Anspruchs 1; derartige Naßläuferpumpen sind z.B. aus der DE-A1-38 18 532 bzw. der DE-U-90 16 330 bekannt.

Die in den Gleitlagern drehbar gelagerte, gleichzeitig an ihrem in das Pumpengehäuse ragenden freien Ende das Pumpenrad aufnehmende Rotorwelle des Elektromotors ist im Falle eines Naßläufers dem von Fall zu Fall unterschiedlich aggressiven Fördermedium ausgesetzt; demzufolge werden insbesondere bei Geschirrspülerpumpen üblicherweise korrosionsbeständige austenitische Stähle verwendet, die gemäß üblicher Fachmeinung, z.B. gemaß VDI-Richtlinien 2541, Pkt. 2, für eine Paarung mit einer Kunststoff-Lagerbuchse nicht geeignet sind, da der metallische Gleitpartner für diesen Fall eine Rockwellhärte von wenigstens 50 HRC aufweisen soll, die jedoch bei austenitischen Stählen nicht gegeben ist.

Erfindungsgemäß kann eine insbesondere zum Einsatz bei Geschirrspülerpumpen mit zu förderndem aggressiven Medium, gegen hohen Lager- und Wellenverschleiß immune und damit für einen ungestörten und geräuscharmen Dauereinsatz geeignete Lagerung für eine Naßläuferpumpe durch die Kombination einer Rotorwelle aus austenitischem Stahl und kostengünstigen Kunststoff-Lagerbuchsen mit inkorporierter Schmierung erreicht werden. Als Schmiermittelbeigabe ist insbesondere eine Graphit-Beimischung andere wie z.B. eine MoS₂-Beimischung oder eine PTFE-Beimischung vorgesehen. Als besonders vorteilhafte Kombination sind nach einer Ausgestaltung der Erfindung eine Rotorwelle aus austenitischem Stahl Werkstoff-Nr. 1.4401 und Kunststoff-Lagerbuchsen aus graphitgefülltem Polyamid PA 12 vorgesehen.

Durch die US-A-4 850 818 ist zwar eine Magnetpumpe bekannt, bei der zum Schutz gegen aggressive zu fördernde Medien die Pumpenradwelle z.B. aus korrosionsfestem Stahl und deren Lager aus Kunststoff mit Kohlenstoffbeimischung gefertigt sein können, jedoch fehlen Hinweise auf die bestimmte erfindungsgemäße Materialkombination von Lager einerseits und Rotorwelle andererseits, wobei die Lagerung der Rotorwelle des antreibenden Elektromotors außerdem nicht als Naßläufer einem aggressiven Medium ausgesetzt ist.

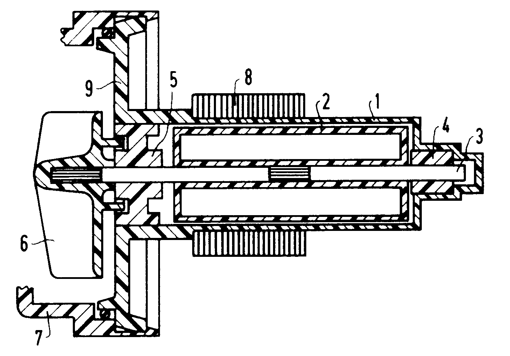

In der Zeichnung ist eine Naßläuferpumpe mit einem Synchronmotor-Antrieb für einen Geschirrspüler dargestellt.

In einem Spaltrohr 1 ist in einer am rechten Ende eingesetzten ersten Kunststoff-Lagerbuchse 4 und in einer am linken pumpenseitigen Ende eingesetzten Kunststoff-Lagerbuchse 5 die Rotorwelle 3 eines Einphasen-Synchronmotors zum Antrieb einer Geschirrspülerpumpe drehbar gelagert. Das Spaltrohr 1 wird von einem bewickelten Statorblechpaket 8 umfaßt. An seinem linken Ende mündet das aus Kunststoff gespritzte Spaltrohr 1 in einen Spaltrohrflansch 9, an dem unter Zwischenlage einer Dichtung das Pumpengehäuse 7 befestigt ist. An dem linken, in das Pumpengehäuse 7 ragenden freien Ende der Rotorwelle 3 ist ein Pumpenrad 6 befestigt. Im Bereich des Statorblechpaketes 8 ist relativ drehbar zur Rotorwelle 3 ein Dauermagnet-Kunststofftragkörper 2 gelagert.

Erfindungsgemäß bestehen die Rotorwelle 3 aus austenitischem Stahl: Werkstoff-Nr. 1.4401 und die Kunststoff-Lagerbuchsen 4 bzw.5 aus einem graphitbeigefüllten Polyamid PA 12. Selbstverständlich können auch hier im Rahmen vorliegender Erfindung gleichwertige Materialien eingesetzt werden, die hinsichtlich der Rotorwelle die gleiche Korrisionsbeständigkeit und im Zusammenwirken mit den Kunststoff-Lagerbuchsen die gleiche Abriebfestigkeit, vor allem durch die inkorporierte Schmierung, aufweisen.

## Patentansprüche

1. Von einem Elektromotor angetriebene Pumpe, insbesondere von einem Einphasen-Synchronmotor mit Anlaufhilfe angetriebene Geschirrspüler-Pumpe, mit in einem Spaltrohr (1) über zumindest ein Gleitlager (Lagerbuchsen 4 bzw.5) gelagertem Naßläufer des Elektromotors, **gekennzeichnet durch** die Kombination einer Rotorwelle (3) des Elektromotors aus austenitischem Stahl mit Lagerbuchsen (4 bzw.5) aus Kunststof mit inkorporierter Schmierung.

2. Von einem Elektromotor angetriebene Pumpe nach Anspruch 1, **gekennzeichnet durch** Kunststoff-Lagerbuchsen (4 bzw.5) mit einer Graphit-Beimischung.

3. Von einem Elektromotor angetriebene Pumpe nach Anspruch 1, **gekennzeichnet durch** Kunststoff-Lagerbuchsen (4 bzw.5) mit einer MoS₂ (Molybdänsulfid)-Beimischung.

4. Von einem Elektromotor angetriebene Pumpe nach Anspruch 1, **gekennzeichnet durch** Kunststoff-Lagerbuchsen (4 bzw.5) mit einer PTFE (Polytetrafluorethylen)-Beimischung.

5. Von einem Elektromotor angetriebene Pumpe nach Anspruch 1, **gekennzeichnet durch** eine Rotorwelle (3) aus austenitischem Stahl: Werkstoff-Nr. 1.4401 und Kunststoff-Lagerbuchsen (4 bzw.5) aus einem graphitbeigefüllten Polyamid PA 12.

## Claims

1. Pump driven by an electric motor, in particular a dishwasher pump driven by a single-phase synchronous motor with starting aid, having a wet rotor of the electric motor mounted in a can (1) by means of at least one sliding bearing (bearing bushes 4 and 5), characterized by the combination of a rotor shaft (3) of the electric motor of austenitic steel with bearing bushes (4 and 5) of plastic with incorporated lubrication.

2. Pump driven by an electric motor according to Claim 1, characterized by plastic bearing bushes (4 and 5) with added graphite.

3. Pump driven by an electric motor according to Claim 1, characterized by plastic bearing bushes (4 and 5) with added MoS₂ (molybdenum sulphide).

4. Pump driven by an electric motor according to Claim 1, characterized by plastic bearing bushes (4 and 5) with added PTFE (polytetrafluoroethylene).

5. Pump driven by an electric motor according to Claim 1, characterized by a rotor shaft (3) of austenitic steel: material No. 1.4401 and plastic bearing bushes (4 and 5) of a polyamide PA 12 with added graphite filler.

## Revendications

1. Pompe entraînée par un moteur électrique, notamment pompe de lave-vaisselle entraînée par un moteur synchrone monophasé équipé d'un système auxiliaire de démarrage, comportant un rotor noyé du moteur électrique monté dans une chemise (1) par l'intermédiaire d'au moins un palier lisse (coussinets 4 et 5), caractérisée par la combinaison d'un arbre (3) du rotor du moteur électrique en acier austénitique et de coussinets (4 ou 5) en matière plastique, à système de lubrification incorporé.

2. Pompe entraînée par un moteur électrique selon la revendication 1, caractérisée par des coussinets (4 ou 5) en une matière plastique, à laquelle est mélangé du graphite.

3. Pompe entraînée par un moteur électrique selon la revendication 1, caractérisée par des coussinets (4 ou 5) en une matière plastique, à laquelle est mélangé du MoS₂ (sulfure de molybdène).

4. Pompe entraînée par un moteur électrique selon la revendication 1, caractérisée par des coussinets (4 ou 5) en une matière plastique, à laquelle est mélangé du PTFE (polytétrafluoroéthylène).

5. Pompe entraînée par un moteur électrique selon la revendication 1, caractérisée par un arbre (3) du rotor en acier austénitique : N° de matériau 1.4401, et des coussinets (4 ou 5) en une matière plastique formée par un polyamide PA 12, chargé de graphite.
